Europäisches Patentamt

European Patent Office

Office européen des brevets

(11) Numéro de publication: **0 395 820**
**A1**

## (12) DEMANDE DE BREVET EUROPEEN

(21) Numéro de dépôt: 89401239.2

(22) Date de dépôt: 02.05.89

(51) Int. Cl.⁵: **G11B 19/02, G11B 17/00, G11B 27/34, G11B 33/10**

(43) Date de publication de la demande:
**07.11.90 Bulletin 90/45**

(84) Etats contractants désignés:
**AT BE CH DE ES GB GR IT LI LU NL SE**

(71) Demandeur: **Soulodre, Henri-Paul**
**46, avenue Bosquet**
**Paris(FR)**

Demandeur: **Jean, Gérard**
**62, 6ème Avenue**
**Lamorlaye (Oise)(FR)**

(72) Inventeur: **Soulodre, Henri-Paul**
**46, avenue Bosquet**
**Paris(FR)**
Inventeur: **Jean, Gérard**
**62, 6ème Avenue**
**Lamorlaye (Oise)(FR)**

(74) Mandataire: **Cabinet Pierre HERRBURGER**
**115, Boulevard Haussmann**
**F-75008 Paris(FR)**

(54) **Boîtier de manipulation destiné à un lecteur d'informations audio et/ou vidéo, enregistrées sur un support tel que audio et/ou vidéodisque laser ou tout autre support optique.**

(57) Il comporte des touches de commande (4 ; 5, 6, 7) coopérant pour commander la lecture ou la navigation à l'intérieur d'une partie prédéterminée des informations enregistrées sur le vidéodisque (3), avec des indications également pré-enregistrées sur ce dernier ou sur une mémoire annexe (25) associée à celui-ci qui correspondent à une subdivision en chapitres, pages et paragraphes des informations enregistrées sur le vidéodisque.

FIG.1

FIG.2

## Boîtier de manipulation destiné à un lecteur d'informations audio et/ou vidéo, enregistrées sur un support tel que audio et/ou vidéodisque laser ou tout autre support optique.

La présente invention se rapporte à un boîtier de manipulation destiné à un lecteur d'informations audio et/ou vidéo enregistrées sur un support tel que audio et/ou vidéodisque laser ou tout autre support optique tel que par exemple DON, CD-ROM, CD-I etc... et coopérant avec un écran d'affichage.

Ces dernières années, on a pu assister à un développement considérable des techniques audiovisuelles et nombreux sont maintenant les particuliers qui possèdent un magnétoscope ou un lecteur de vidéodisques.

Parallèlement, ces techniques sont appelées à jouer un rôle croissant, non seulement dans le domaine des loisirs, mais également dans ceux de l'éducation, de l'information et de la documentation.

Parallèlement aux magnétoscopes classiques, utilisant des bandes magnétiques en tant que support d'informations, on a vu apparaître des lecteurs audio et/ou vidéodisques laser dont les performances se révélent nettement supérieures.

De tels systèmes, qui peuvent aujourd'hui traiter correctement tous les cas, à l'exception d'une vue fixe accompagnée de son, permettent l'enregistrement sur une seule face d'un disque, de jusqu'à environ 60 000 images.

Lorsque de tels dispositifs sont utilisés, notamment dans un but éducatif, cette possibilité de stockage sur un volume très restreint d'une grande quantité d'images associées à des informations audio enregistrées sur des pistes séparées, pose tout naturellement des problèmes de "repérage" et de "navigation".

En effet, lorsque sur un support d'informations tels qu'un vidéodisque laser, on cherche à ne lire qu'une partie des informations enregistrées, il est nécessaire de pouvoir "positionner" rapidement et de manière aisée et compréhensible pour l'utilisateur non professionnel les organes notamment la tête de lecture au niveau des informations recherchées.

En l'absence de tels moyens, les dispositifs audiovisuels susmentionnés ne peuvent pas être utilisés par tous de manière satisfaisante dans le domaine de l'éducation, de l'information ou de la recherche.

Or, on n'a jusqu'à présent jamais proposé de dispositif de nature à résoudre ce problème d'une manière standardisée.

La présente invention a pour objet de combler cette lacune en proposant un dispositif susceptible de permettre à l'utilisateur non technicien de sélectionner simplement parmi les informations enregistrées sur un support tel que audio et/ou vidéodisque laser ou tout autre support optique, un passage déterminé de positionner les organes de lecture de ces informations au droit de ce passage et de "naviguer" à volonté sur le support.

A cet effet, l'invention se rapporte à un boîtier de manipulation en liaison avec un lecteur d'informations du type susmentionné non spécifique au boîtier, caractérisé en ce qu'il comporte des touches de commande coopérant pour commander la lecture ou la navigation à l'intérieur d'une partie prédéterminée des informations enregistrées sur le vidéodisque, avec des indications également pré-enregistrées sur ce dernier ou sur une mémoire annexe associée à celui-ci qui correspondent à une subdivision en chapitres, pages et paragraphes des informations enregistrées sur le vidéodisque.

Il s'agit, en fait, là de subdivisions similaires à celles existant dans un livre classique donc familières à l'utilisateur non technicien quelle que soit sa formation et sa culture.

Ces indications pré-enregistrées constituent en quelque sorte le lien entre le langage naturel de l'utilisateur et le langage technique du lecteur.

La mémoire annexe notamment de type ROM peut être facilement insérée dans le boîtier et remplacée par une autre, de façon à permettre plusieus lectures d'un même support.

D'une manière similaire à celle couramment utilisée dans les télécommandes d'appareils de télévision ou de magnétoscopes, les signaux de commande envoyés par le boîtier de manipulation au support d'informations sont, par exemple, constitués par des signaux infrarouges qui sont, tout d'abord, reçus par un capteur spécialement prévu à cet effet avant d'être transmis à la tête de lecture.

Pour que l'utilisateur puisse facilement retrouver, sur le support d'informations, la subdivision correspondant à la ou aux informations recherchées, il est nécessaire que celle-ci coopère avec un descriptif annexe faisant office de "sommaire" qui peut être constitué par un petit ouvrage imprimé complémentaire annexe, ou encore par une "table des matières" pré-enregistrée sur le support d'informations ou sur un support annexe sous forme sonore ou sous la forme d'une ou plusieurs images qui peuvent apparaître sur l'écran par suite de la manipulation d'une touche particulière du boîtier de manipulation.

D'une manière similaire, on peut envisager d'associer à un ouvrage imprimé pré-existant, des sub-divisions du support associées aux pages ou chapites de cet ouvrage de manière à faciliter la lecture.

Le sommaire susmentionné correspond donc tout simplement à l'extension audiovisuelle du sommaire classique des livres, c'est-à-dire qu'il s'agit d'un ensemble de pages organisées en un ou plusieurs plans audiovisuels qui correspond(ent) à la "table des matières" c'est-à-dire indique(ent) les subdivisions de l'information en chapitres, sous-chapitres, pages, paragraphes etc... avec l'indication de la première page de la subdivision concernée et éventuellement le nombre de pages et l'indication du chapitre correspondant.

De manière classique, et comme dans la plupart des ouvrages imprimés, on peut associer à cet ouvrage un index correspondant lui aussi à une touche particulière du boîtier de manipulation et consistant notamment en une ou plusieurs images vidéo fixes avec l'indication des pages et chapitres dans lesquels apparaissent dans le support d'informations, les éléments de l'index, le classement de ces éléments étant habituellement alphabétique.

Il convient, par ailleurs, d'indiquer que les vidéodisques laser actuels ne permettent de découper automatiquement chaque face du disque qu'en quatre-vingt "séquences" audiovisuelles pouvant être identifiées par la tête de lecture, ces séquences créées au moment de la fabrication du support étant difinitives et non modifiables.

Si l'on veut effectuer une subdivision plus importante des environ 60 000 images préenregistrées sur cette face, il faut, dans l'état actuel de la technique, prévoir un découpage logique supplémentaire, soit externe, c'est-à-dire non gravé sur le disque et stocké dans une mémoire morte, soit interne, c'est-à-dire chargé dans une petite partie de la piste son du disque.

Par ailleurs, et comme il a déjà été indiqué ci-dessus, si, dans le cas d'un support constitué par un vidéodisque laser, on veut prévoir la possibilité de lire un commentaire sonore sur une image vidéo fixe, il est nécessaire de lui associer un audio-disque laser lu par un lecteur indépendant ; il est alors nécessaire de prévoir sur les deux supports ou sur une mémoire annexe, des indications permettant au boîtier de manipulation de synchroniser les commandes des deux lecteurs.

Lorsque l'opérateur a effectué une commande à l'aide du boîtier susmentionné, il est nécessaire qu'il puisse contrôler à chaque instant, les opérations exécutées ; à cet effet, et selon une autre caractéristique de l'invention, le boîtier comporte un moyen d'affichage notamment à diodes, à cristaux liquides... permettant de suivre constamment les manipulations effectives et d'aider l'utilisateur.

Il convient, par ailleurs, de mentionner que le boîtier de manipulation conforme à l'invention, qui est le plus souvent un boîtier du type à télécommande classique, peut également être constitué par un bandeau placé à la partie inférieure de l'écran d'affichage et pouvant être commandé par simple contact tactile ou encore par une "souris".

Le boîtier de manipulation conforme à l'invention permet la lecture de vidéodisuqes éditées spécialement ou, s'il est associé à une mémoire, la lecture de vidéodisques quelconques du commerce.

Les caractéristiques du boîtier de manipulation qui fait l'objet de l'invention seront décrites plus en détail en se référant aux dessins annexés dans lesquels :

- la figure 1 est un schéma général représentant un dispositif conforme à l'invention,

- la figure 2 est une représentation schématique du boîtier de manipulation.

Les figures représentent le cas particulier dans lequel le support d'informations est constitué par un vidéodisque laser. Bien entendu, ce support pourrait être différent, sans pour cela sortir du cadre de l'invention.

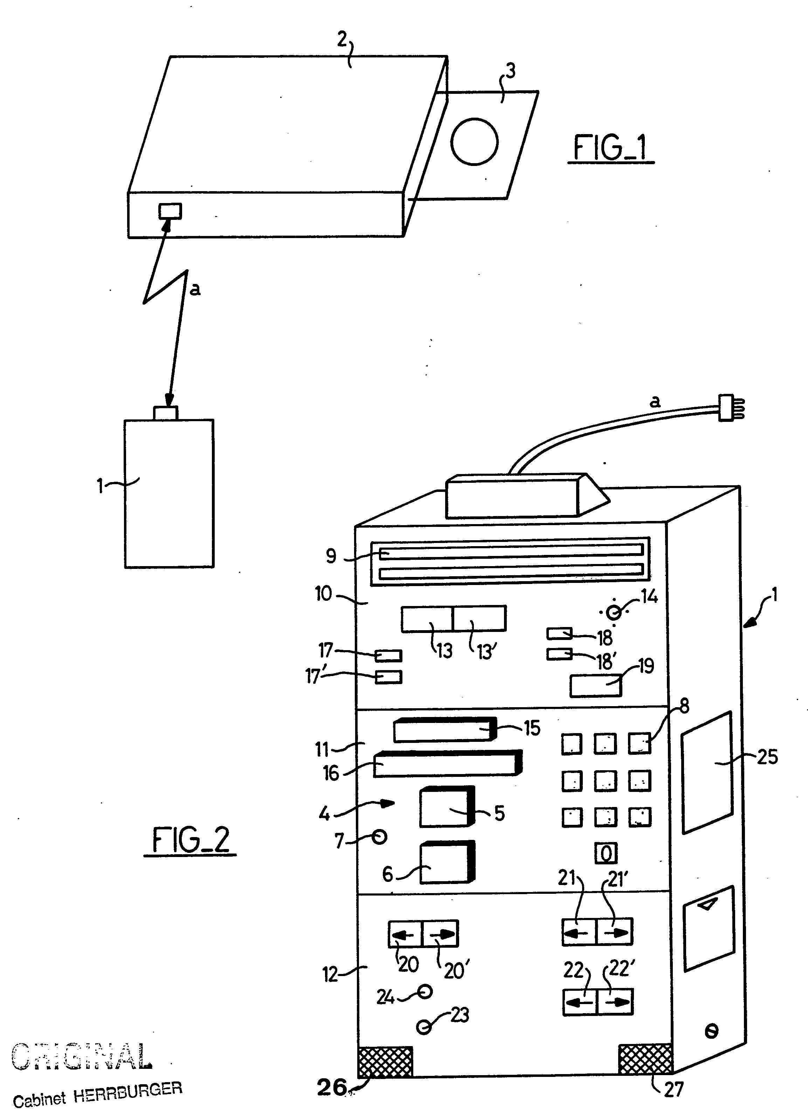

Selon l'exemple représenté sur la figure 1, l'invention se rapporte à un boîtier de commande 1 destiné à coopérer avec un dispositif de lecture 2 de vidéodisque 3 comportant, par exemple, des pistes audio coopérant avec des pistes vidéo sur lesquelles sont enregistrées environ 60 000 images par face du disque ; ce dispositif coopère avec un écran d'affichage non représenté.

Selon la figure, le boîtier 1 est susceptible d'envoyer au lecteur 2 un signal de commande a notamment un signal infrarouge ou un signal transmis par une liaison filaire de type RS 232 comme représenté sur la figure 2, susceptible de commander la lecture d'une partie donnée des informations enregistrées sur le vidéodisque 3 correspondant par exemple à des subdivisions des informations enregistrées notamment en chapitres, pages et paragraphes à la manière de celle prévue dans un livre, subdivisions qui sont pré-enregistrées directement sur le support d'informations ou sur une mémoire associée à celui-ci.

Selon la figure 2, le boîtier de commande 1 comprend un certain nombre de touches 4 permettant de commander directement l'opération de lecture souhaitée.

Dans l'exemple représenté sur la figure qui n'est nullement limitatif de l'invention, le boîtier 1 est subdivisé en trois zones 10, 11 et 12 contenant chacune des touches 4.

La zone médiane 11 correspond à la zone de programmation proprement dite, c'est-à-dire qu'elle comporte des touches 5 et 6 correspondant respectivement aux chapitres et aux pages en lesquels sont subdivisées les informations enregistrées sur le disque 3, ainsi que des touches 8 portant une numérotation 0, 1, 2, 3 ... correspondant aux chapitres ou pages dont on veut effectuer la lecture. Une touche gomme 7 permet d'intervenir immédiatement en cas de manoeuvre erronée d'une de ces touches.

Lorsque l'appareil est utilisé dans un but éducatif, les touches 8 peuvent également être utilisées pour effectuer une sélection entre plusieurs réponses possibles à une question.

Les touches 15 et 16 correspondent à la commande d'affichage, sur l'écran non représenté, d'informations particulières, telles que l'index ou le sommaire.

Pour que l'opérateur puisse, à chaque instant, surveiller la mise en oeuvre des opérations, les touches 4 sont associées à un écran d'affichage 9 notamment à diodes ou à cristaux liquides prévu dans la zone 10 et sur lequel on peut vérifier l'opération commandée ; bien entendu, la configuration particulière en deux lignes de l'écran d'affichage 9 représenté sur la figure 2 ne doit, en aucune manière, être considérée comme étant limitative de l'invention.

En plus de cet écran 9, la zone 10 comporte les touches de commande proprement dites, c'est-à-dire des touches marche/arrêt 13, 13' associées à un voyant lumineux 14 permettant de commander la mise en marche ou l'arrêt du dispositif, ainsi que des touches 17, 17' correspondant respectivement à l'ouverture et à la fermeture du livre matérialisé par le vidéodisque 3. La manipulation des touches 17, 17' commande l'"activation" des informations correspondant à la structure du livre présélectionnée et stockées, soit sur le support lui-même, soit dans une mémoire interne.

Pour faciliter la manoeuvre de l'utilisateur, la zone 10 comporte, par ailleurs, une touche 18 permettant la mise en place d'un signet, c'est-à-dire le repérage d'une zone prédéterminée du vidéodisque 3 avant de se reporter à une autre zone de celui-ci ; cette touche 18 est associée à une touche 18' permettant de se replacer ensuite immédiatement à la zone repérée par le signet.

Une touche guide 19 est, en outre, prévue pour expliquer à l'utilisateur le fonctionnement du dispositif.

La zone 12 du boîtier comprend des touches de navigation 20, 20', 21, 21' et 22, 22' respectivement susceptibles de commander le positionnement des organes de lecture sur la page, le paragraphe, ou l'image précédant ou suivant (touche page avant, page après, paragraphe avant, paragraphe après et image avant, image après). Une pression continue sur les touches de navigation peut entraîner une lecture accélérée ou ralentie du support.

Après positionnement, une touche 23 permet de commander la lecture du vidéodisque 3 à partir de l'endroit prédéterminé, tandis qu'une touche 24 correspond à la commande d'une pause sur une image donnée.

Par ailleurs, une mémoire annexe 25 vient s'inclure dans le boîtier 1, celle-ci permet, d'une part, d'utiliser tous les lecteurs du commerce, et, d'autre part, de subdiviser et lire des vidéodisques du commerce de plusieurs façons différentes en fonction des souhaits de l'utilisateur.

La description ci-dessus n'est, bien entendu, donnée qu'à titre d'exemple, et comme il a déjà été indiqué, le boîtier de manipulation conforme à l'invention pourrait comporter d'autres touches, ou revêtir des formes totalement différentes (souris ou écran tactile situé sur une partie de l'écran vidéo..) sans pour cela sortir du cadre de l'invention.

Des touches "son 1" "son 2" (26, 27) permettent d'associer à une même série d'images, des suites de son différentes.

## Revendications

1°) Boîtier de manipulation destiné à un lecteur d'informations audio et/ou vidéo enregistrées sur un support tel que audio et/ou vidéodisque laser ou tout autre support optique caractérisé en ce qu'il comporte des touches de commande (4 ; 5, 6, 7) coopérant pour commander la lecture ou la navigation à l'intérieur d'une partie prédéterminée des informations enregistrées sur le vidéodisque (3), avec des indications également pré-enregistrées sur ce dernier ou sur une mémoire annexe (25) associée à celui-ci qui correspondent à une subdivision en chapitres, pages et paragraphes des informations enregistrées sur le vidéodisque.

2°) Boîtier selon la revendication 1, caractérisé en ce que les touches de commande (4) sont associées à un moyen d'affichage.

3°) Boîtier selon l'une quelconque des revendications 1 et 2), caractérisé en ce qu'il comporte des touches (15, 16) commandant la lecture d'un classement des informations enregistrées sur le vidéodisque (3).

4°) Boîtier selon l'une quelconque des revendications 1 à 3, caractérisé en ce qu'il comporte des touches de navigation (20, 20', 21, 21', 22, 22').

5°) Boîtier selon l'une quelconque des revendications 1 à 3, caractérisé en ce qu'il comporte deux touches (18) permettant la mise en place d'un signal, ainsi qu'une touche (18') permettant de se reporter automatiquement à la roue repérée par ce signet.

EP 0 395 820 A1

FIG_1

FIG_2

# RAPPORT DE RECHERCHE EUROPEENNE

**Office européen des brevets**

Numero de la demande

EP 89 40 1239

Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0262954 (PIONEER ELECTRONIC CORPORATION) <br> * le document en entier * | 1, 2 | G11B19/02 <br> G11B17/00 |
| Y | | 4 | G11B27/34 |
| A | | 5 | G11B33/10 |
| Y | TECHNISCHE RUNDSCHAU. <br> vol. 79, no. 11, 13 mars 1987, BERN CH <br> pages 74 - 79; APPELRATH: <br> "Bildplatten-Navigations-und-Retrievalsysteme" <br> * le document en entier * | 4 | |
| A | | 1-3 | |
| X | FR-A-2544536 (TELEMEDIA GMBH.) <br> * le document en entier * | 1, 3 | |
| X | EP-A-0187073 (SORRIAUX) <br> * le document en entier * | 1, 5 | |
| A | FR-A-2517863 (MOULENE) <br> * le document en entier * | 1, 2, 5 | |
| A | FR-A-2495871 (HENNINGSSON) <br> * le document en entier * | 1 | DOMAINES TECHNIQUES RECHERCHES (Int. Cl.5 ) <br><br> G11B |
| A | AUDIO. <br> vol. 68, no. 9, septembre 1984, PHILADELPHIA US <br> pages 50 - 54; Feldman: <br> "REVOX B225 COMPACT DISC PLAYER" <br> * page 52, ligne 51 - page 53, ligne 9 * | 1, 4 | |
| A | PATENT ABSTRACTS OF JAPAN <br> vol. 11, no. 201 (P-590)(2648) 30 juin 1987, <br> & JP-A-62 022287 (HITACHI LTD.) 30 janvier 1987, <br> * le document en entier * | 1 | |
| A | PATENT ABSTRACTS OF JAPAN <br> vol. 7, no. 256 (P-236)(1401) 15 décembre 1983, <br> & JP-A-58 139272 (KONPIYUUTAA SERVICE K.K.) 18 août 1983, <br> * le document en entier * | 1 | |

Le présent rapport a été établi pour toutes les revendications

| Lieu de la recherche | Date d'achèvement de la recherche | Examinateur |
|---|---|---|
| LA HAYE | 11 JANVIER 1990 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP   89 40 1239
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| | --- | | |
| A | JOURNAL OF THE BRITISH KINEMATOGRAPH SOCIETY. vol. 65, no. 7, juillet 1983, LONDON GB pages 384 - 388; MARGADANT: "Interfacing A-V Equipment to Compact Disc" *page 387,"The Interface Unit"-page 388,"Several Shows on a Disc";fig.4* | 1 | |
| | --- | | |
| A | GB-A-2064260 (N.V.PHILIPS'GLOEILAMPENFABRIEKEN) * le document en entier * | 1 | |
| | --- | | |
| A | SMPTE JOURNAL. vol. 86, no. 2, février 1977, SCARSDALE, US pages 80 - 83; MATHIEU: "A Random Access System Adapted for the Optical Videodisc: Its Impact onInformation Retrieval" * le document en entier * | 1 | |
| | --- | | |
| E | FR-A-2623930 (SOULODRE ET AL.) * le document en entier * | 1-4 | |
| L | φprioritéη | | **DOMAINES TECHNIQUES RECHERCHES (Int. Cl.5 )** |
| | ----- | | |

Le présent rapport a été établi pour toutes les revendications

| Lieu de la recherche | Date d'achèvement de la recherche | Examinateur |
|---|---|---|
| LA HAYE | 11 JANVIER 1990 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)